# EUROPÄISCHE PATENTSCHRIFT

(11) **EP 2 391 834 B1**
(45) Veröffentlichungstag und Bekanntmachung des Hinweises auf die Patenterteilung: **28.11.2012**
(21) Anmeldenummer: 10700808.8
(22) Anmeldetag: 14.01.2010
(51) Int. Cl.: F16D 65/092

(54) **Verbindung eines Bremsbelages mit einem Belaghalter**
Connection of a brake lining and a lining mount
Assemblage d'une garniture de frein avec un porte- garniture

(30) Priorität: 27.01.2009 DE 102009006290
(43) Veröffentlichungstag der Anmeldung: 07.12.2011
(73) Patentinhaber: KNORR-BREMSE Systeme für Schienenfahrzeuge GmbH, 80909 München (DE)
(72) Erfinder: MOSBACH, Christian, 82239 Alling (DE); MATHIEU, Michael, 82178 Puchheim (DE); LEHNEIS, Michael, 81669 München (DE); EBNER, Christian, 86161 Augsburg (DE); STEGMANN, André, 82223 Eichenau (DE)
(74) Vertreter: Mattusch, Gundula
(86) Internationale Anmeldenummer: PCT/EP2010/000173
(87) Internationale Veröffentlichungsnummer: WO 2010/086088

(56) Entgegenhaltungen:
- EP-A1- 0 226 816
- DE-A1- 2 547 529
- DE-B- 1 256 113
- FR-A1- 2 687 441

## Beschreibung

Die Erfindung betrifft eine Verbindung eines Bremsbelages mit einem Belaghalter, vorzugsweise einer Scheibenbremse eines Schienenfahrzeuges, gemäß dem Oberbegriff des Anspruchs 1.

Bremsbeläge als Bestandteil einer Scheibenbremse eines Schienenfahrzeuges sind an dem Belaghalter durch Korrespondenz eines rückseitig am Bremsbelag vorgesehenen Führungssteges mit einer in den Belaghalter eingebrachten Führungsbahn gehalten. Dabei ist die Führungsbahn im Querschnitt schwalbenschwanzförmig ausgebildet, während der Führungssteg daran angepasst einliegt. Hierdurch wird eine einfache Handhabung insbesondere bei einem Bremsbelagwechsel ermöglicht, wobei der Bremsbelag in Funktionsstellung mit dem Belaghalter verriegelt ist, so dass der Bremsbelag gegen Verlieren gesichert ist.

U.a. toleranzbedingt liegt der Bremsbelag sowohl in Längsrichtung der Führungsbahn wie auch quer dazu mit Spiel ein. Durch im Fahrbetrieb entstehende Vibrationen führen in ungebremster Stellung des Bremsbelages zu einem Klappern und bei entsprechenden Belastungen schließlich zu einem Verschleiß des Bremsbelages, des Belaghalters und insbesondere der Verriegelung. Dies steht einer Standzeitoptimierung entgegen, mit den sich daraus ergebenden Betriebskosten.

Zwar sind konstruktive Maßnahmen bekannt, um das genannte Klappern zu vermeiden, beispielsweise durch eine Klemmung des Bremsbelages in dessen Längsrichtung (EP 0 226 816 A1, FR 2 687 441), jedoch besteht dabei die Gefahr, dass die Bremsbeläge nicht flächig am Belaghalter anliegen. Vielmehr kann es zu einem Abheben des Bremsbelages vom Belaghalter kommen.

Daneben ist eine Klemmung des Bremsbelages bekannt, bei der eine Klemmfeder vorgesehen ist, die durch Einschieben des Bremsbelages gespannt wird und daher nur eine relativ geringe Federkraft aufweisen darf, wobei diese Klemmfeder quer zur Einschubrichtung des Bremsbelages wirksam ist. Eine Demontage des Bremsbelages wird dadurch erschwert, dass die Klemmwirkung der Klemmfeder nicht gezielt aufgehoben werden kann.

Üblicherweise besteht ein Bremsbelag aus zwei Belaghälften, die innerhalb zulässiger Toleranzen unterschiedlich breit sein können, wodurch eine Klemmung beider Belaghälften bei Verwendung lediglich einer Klemmfeder nicht sichergestellt ist.

Darüber hinaus führen die beim Bremsen entstehenden, sich aus unterschiedlichen Wärmebelastungen ergebenden Temperaturunterschiede zwischen dem Bremsbelag und dem Belaghalter zu erhöhten Spannungen und Verformungen, die gleichfalls eine dauerhafte Funktionssicherheit der beteiligten Bauteile behindern können.

Der Erfindung liegt die Aufgabe zugrunde, eine Verbindung der gattungsgemäßen Art so weiterzuentwickeln, dass die Funktionsfähigkeit der Baueinheit Bremsbelag/Belaghalter verbessert, die Standzeit erhöht und die Betriebskosten gesenkt werden.

Diese Aufgabe wird durch eine Verbindung mit den Merkmalen des Anspruchs 1 gelöst.

Der Bremsbelag ist nun so am Belaghalter fixiert, dass eine flächige Anlage in Zuspannrichtung gegeben ist, ebenso wie eine spielfreie Festlegung des Bremsbelages in dem Belaghalter bzw. in der Führungsbahn.

Das Klemmelement, mit dem der Führungssteg bei gleichzeitiger Hintergreifung gegen die Führungsbahn gepresst wird, ist federbelastet, so dass die genannte spielfreie Befestigung in gewissem Umfang gedämpft ist. Das bislang als sehr störend empfundene Klappern im Fahrbetrieb durch auftretende Vibrationen ist damit wirksam verhindert.

Darüber hinaus werden fertigungsbedingte Toleranzen ausgeglichen. Trotzdem erfolgt ein ungehinderter Maßausgleich bei einer temperaturbedingten unterschiedlichen Ausdehnung des Bremsbelages und des Belaghalters.

Nach einer vorteilhaften Weiterbildung der Erfindung ist der Bremsbelag in Umfangsrichtung eines Schienenrades, mit dem die Scheibenbremse korrespondiert, mittels einer Verriegelungsvorrichtung gesichert, wobei diese Sicherung lösbar ist, um beispielsweise den Bremsbelag auszutauschen.

Um die genannte unterschiedliche Temperaturausdehnung in Längsachsrichtung des Bremsbelages, die im Wesentlichen der Drehrichtung des zugeordneten Schienenrades entspricht, ungehindert zu ermöglichen, ist das Klemmelement in dieser Richtung nicht wirksam, sondern lediglich quer dazu sowie in Zuspannrichtung, also in X- und Y-Richtung.

Zur Federbelastung des Klemmelements, das als Klemmhebel oder als Klemmschieber ausgebildet sein kann, ist eine Druckfeder, beispielsweise in Form einer Schraubenfeder vorgesehen, die sich einerseits am Klemmelement und andererseits am Belaghalter abstützt, wobei zur Lösung der Klemmung die Druckfeder zusammengedrückt wird, was durch ein Betätigungsorgan erfolgt.

Das Betätigungsorgan kann als verdrehbare Nockenwelle oder als axial verschiebbare Druckstange am Belaghalter gelagert sein, wobei die Druckstange im Anlagebereich mit dem Klemmelement ein Keilsegment aufweist, über das bei einer Verschiebung der Druckstange das Klemmelement betätigt wird.

Wie erwähnt, besteht der Bremsbelag aus zwei Belaghälften, von denen jedes einen sich in Längsachsrichtung erstreckenden Führungssteg aufweist, der mit der Führungsbahn des Belaghalters korrespondiert.

Zwar ist für jedes Bremsbelagteil eine Klemmeinrichtung vorgesehen, jedoch werden diese durch ein gemeinsames Betätigungsorgan ebenso betätigt, wie die genannte Verriegelungsvorrichtung, und zwar vorzugsweise zeitgleich.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine erfindungsgemäße Verbindung in einer perspektivischen Ansicht
- Figuren 2 und 3: einen Schnitt durch die Verbindung nach Figur 1 in unterschiedlichen Funktionsstellungen
- Figur 4: eine Einzelheit der Verbindung nach den Figuren 1 bis 3
- Figur 5: ein weiteres Ausführungsbeispiel der Erfindung, ebenfalls in perspektivischer Ansicht
- Figuren 6 und 7: jeweils einen Querschnitt durch die Verbindung nach Figur 5 in unterschiedlichen Funktionsstellungen
- Figur 8: eine Einzelheit der Verbindung nach den Figuren 5 bis 7
- Figur 9: ein weiteres Ausführungsbeispiel der Erfindung in einer perspektivischen Ansicht
- Figuren 10 und 11: jeweils einen Schnitt durch die Verbindung nach Figur 9 in unterschiedlichen Funktionsstellungen
- Figur 12: eine Einzelheit der Erfindung nach den Figuren 9 bis 11
- Figur 13: eine Einzelheit der erfindungsgemäßen Verbindung in unterschiedlichen Funktionsstellungen
- Figur 14: eine weitere Ausführungsvariante der Einzelheit nach Figur 13, ebenfalls in unterschiedlichen Stellungen, jeweils in einer Seitenansicht.

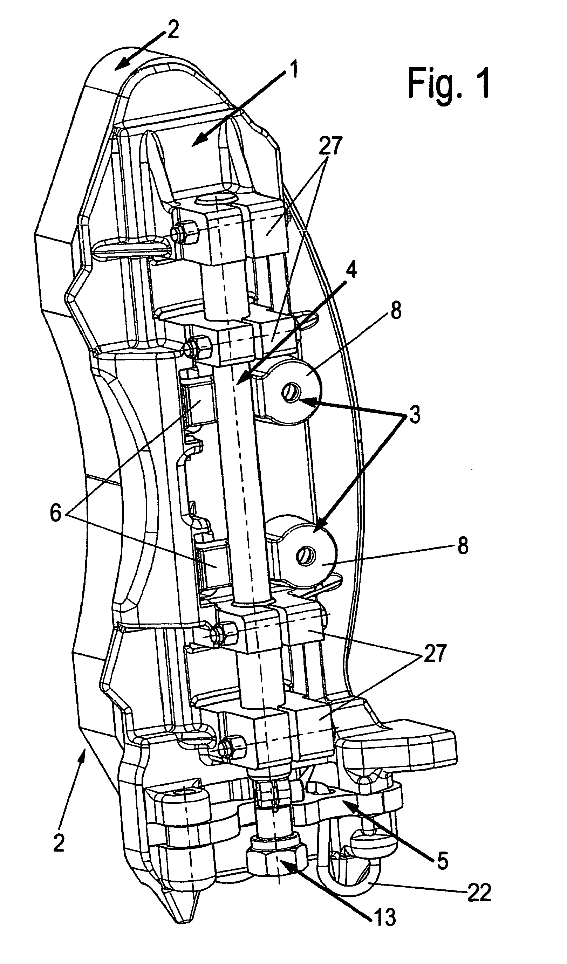

In den Figuren 1, 5 und 9 ist jeweils eine Verbindung eines Bremsbelages 2 einer Scheibenbremse eines Schienenfahrzeuges mit einem Belaghalter 1 dargestellt, wobei der Bremsbelag 2 zweiteilig ausgebildet ist.

Jeder der beiden Bremsbelagteile 2 ist mittels einer am Belaghalter 1 gehaltenen Klemmeinrichtung 3 befestigt, wobei der jeweilige Bremsbelag 2 rückseitig einen Führungssteg 12 aufweist, der in eine schwalbenschwanzförmige Führungsbahn 11 des Belaghalters 1 eingeschoben ist.

Die in den Figuren dargestellten Klemmeinrichtungen 3 sind über ein Betätigungsorgan in Form einer Nockenwelle 4 betätigbar, die in Lagerböcken 27 des Belaghalters 1 gelagert ist. Die Nockenwelle 4 ist dabei zur Betätigung beider Klemmeinrichtungen 3 ausgebildet und mittels einer endseitig angeschlossenen Werkzeugaufnahme 13, in den Ausführungsbeispielen als Sechskant geformt, durch ein geeignetes Werkzeug verdrehbar.

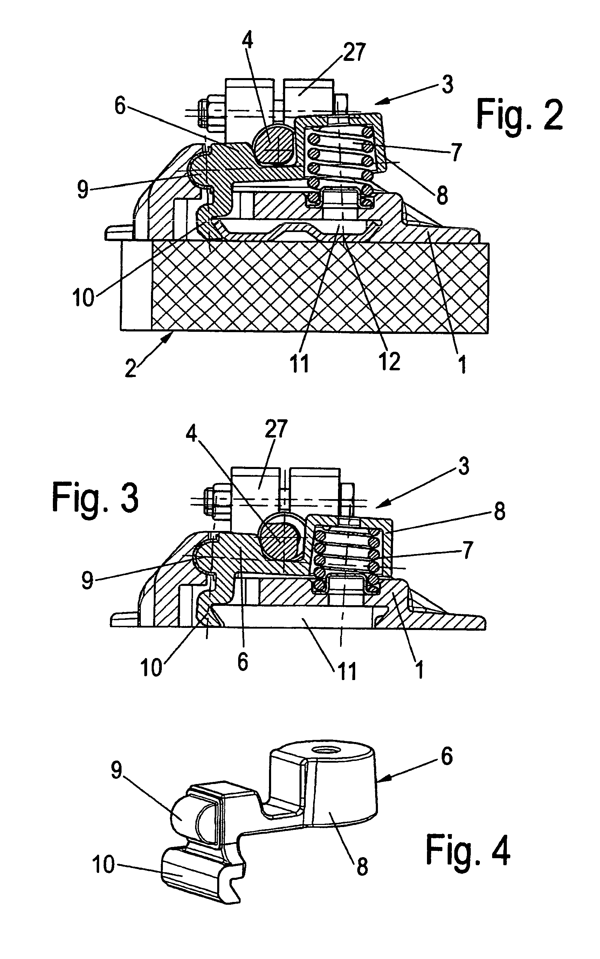

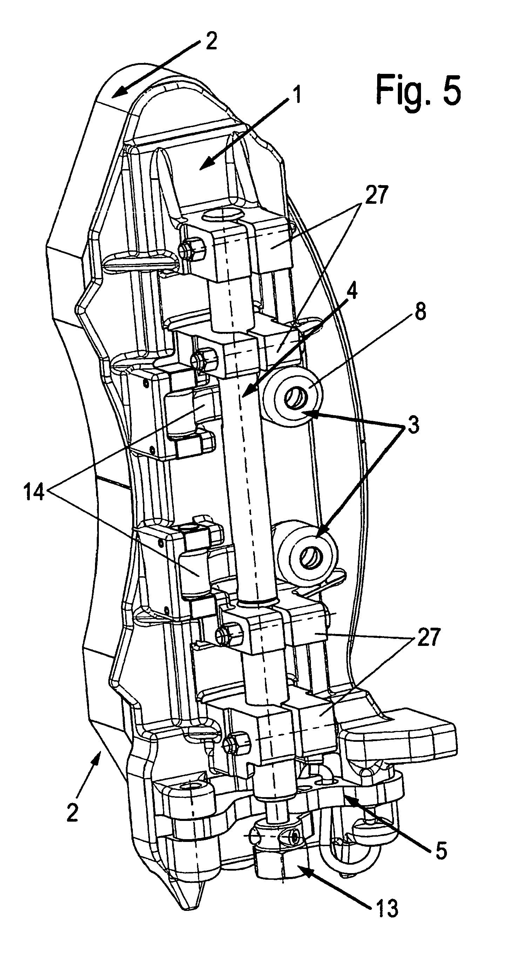

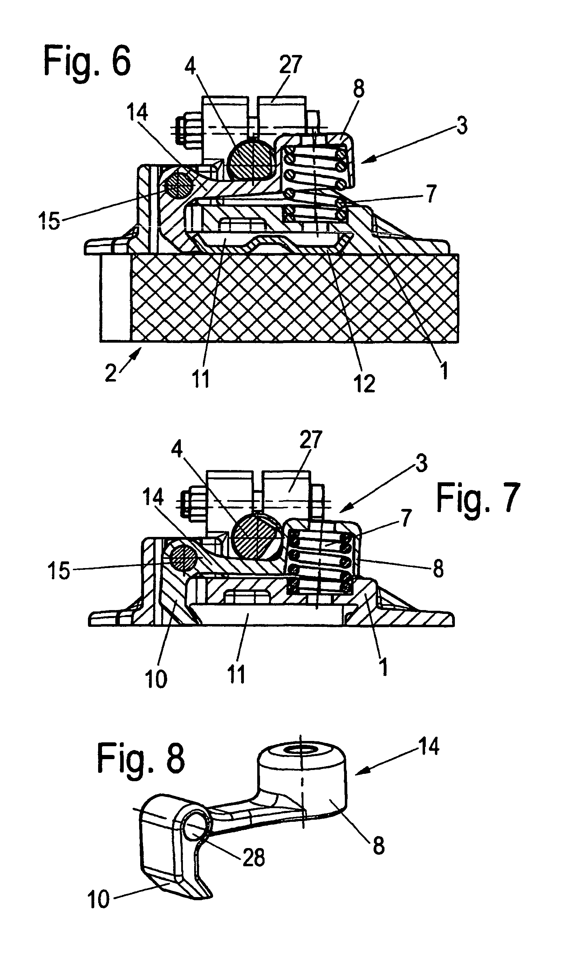

Bei dem in den Figuren 1 bis 4 ebenso wie bei dem in den Figuren 5 bis 8 gezeigten Ausführungsbeispiel weist die Klemmeinrichtung 3 einen Klemmhebel 6, 14 auf, der in den Figuren 4 und 8 jeweils als Einzelheit dargestellt ist.

Dieser als Winkelhebel ausgebildete, zweiarmige Klemmhebel 6, 14 ist mit einer Haube 8 versehen, die eine Druckfeder 7 aufnimmt, die sich andererseits am Belaghalter 1 abstützt und gegen die die Nockenwelle 4 so verdrehbar ist, dass der Klemmhebel 6, 14 außer Eingriff kommt.

Gegenüberliegend der Druckfeder 7 ist der Klemmhebel 6 schwenkbar am Belaghalter 1 gelagert, wozu bei dem Ausführungsbeispiel in den Figuren 1 bis 4 am Klemmhebel 6 eine Lagernase 9 angeformt ist, die in eine angepasste Ausnehmung des Belaghalters 1 eingreift, wobei sich an die Lagernase 9 eine Klaue 10 anschließt, die in Funktionsstellung den Führungssteg 12 hintergreift und gegen die Führungsbahn 11 presst. Dies ist in der Figur 2 deutlich zu erkennen. Hierbei ist die Nockenwelle 4 so verdreht, dass die Kraft der Druckfeder 7 als Klemmkraft wirksam ist und die Klaue 10 an den Führungssteg 12 drückt.

Zum Lösen dieser Klemmverbindung zwischen dem Bremsbelag 2 und dem Belaghalter 1 wird die Nockenwelle 4 entsprechend verdreht, so dass der ausgebildete Nocken den Klemmhebel 6 gegen die Kraft der Druckfeder 7 in Richtung des Belaghalters 1 drückt, wodurch die Klaue 10 aus ihrer Wirkstellung herausgeschwenkt wird, wie dies in der Figur 3 erkennbar ist. In dieser Stellung kann der Bremsbelag 2 in Längsachsrichtung aus der Führungsbahn 11 herausgezogen werden.

Anstelle einer Lagernase 9 ist der Klemmhebel 14 bei dem in den Figuren 5 bis 8 gezeigten Beispiel mittels eines in eine Aufnahme 28 eingesteckten Lagerbolzens 15 am Belaghalter 1 schwenkbar gelagert. Alternativ können seitlich am Klemmhebel 14 Lagerbolzen 15 angeformt sein. Die übrigen Funktionsteile entsprechen denen des Ausführungsbeispiels nach den Figuren 1 bis 4, so dass auf die Beschreibung hierzu verwiesen wird.

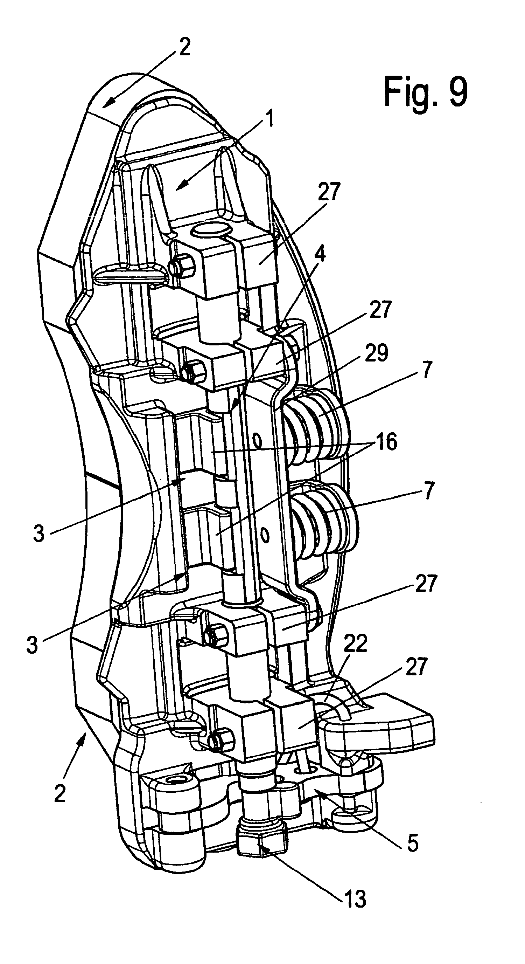

Bei der in den Figuren 9 bis 12 gezeigten Ausführungsvariante ist statt eines Klemmhebels ein Klemmschieber 16 vorgesehen, der bei einer Drehung der Nockenwelle 4, die einerseits am Belaghalter 1 und andererseits an einem Widerlagerschenkel 18 des Klemmschiebers 16 anliegt, parallel zur Grundfläche der Führungsbahn 11, aber quer zur Längsachse federbelastet verschoben wird.

Hierzu ist ebenfalls eine Druckfeder 7 vorgesehen, die einerseits am Belaghalter 1 und andererseits am Klemmschieber 16 anliegt, wozu dieser einen Zentrierdorn 17 aufweist, auf dem die Druckfeder 7 bereichsweise geführt ist. Die Abstützung der Druckfeder 7 am Belaghalter 1 erfolgt an einem Gegenhalter 29, der mit den Lagerböcken 27 verschraubt ist.

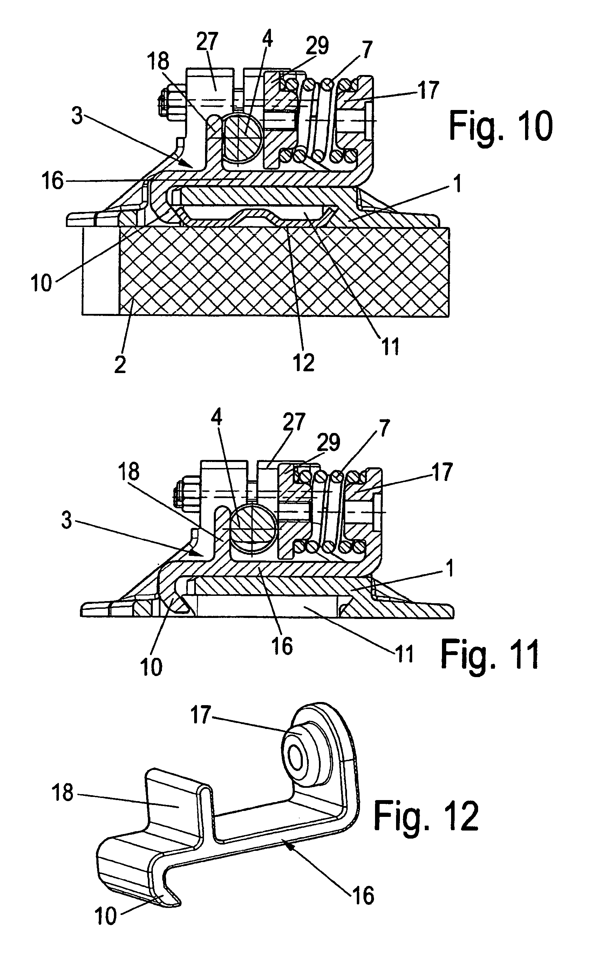

Während in der Figur 10 die Klemmstellung gezeigt ist, in der der Bremsbelag 2 durch den Klemmschieber 16 am Belaghalter 1 festgeklemmt ist, gibt die Figur 11 eine Position wieder, in der der Bremsbelag 2 entnommen ist, d.h., der Klemmschieber 16 ist hierbei außer Eingriff. Im Übrigen weist auch der Klemmschieber 16, der in der Figur 12 als Einzelheit erkennbar ist, eine angeformte Klaue 10 auf, die den Führungssteg 12 hintergreift und in die Führungsbahn 11 presst.

Zur Verschiebesicherung des Bremsbelages 2 am Belaghalter 1 im Bereich der Einschuböffnung für den Bremsbelag 2 am Belaghalter 1, ist eine Verriegelungsvorrichtung 5 vorgesehen.

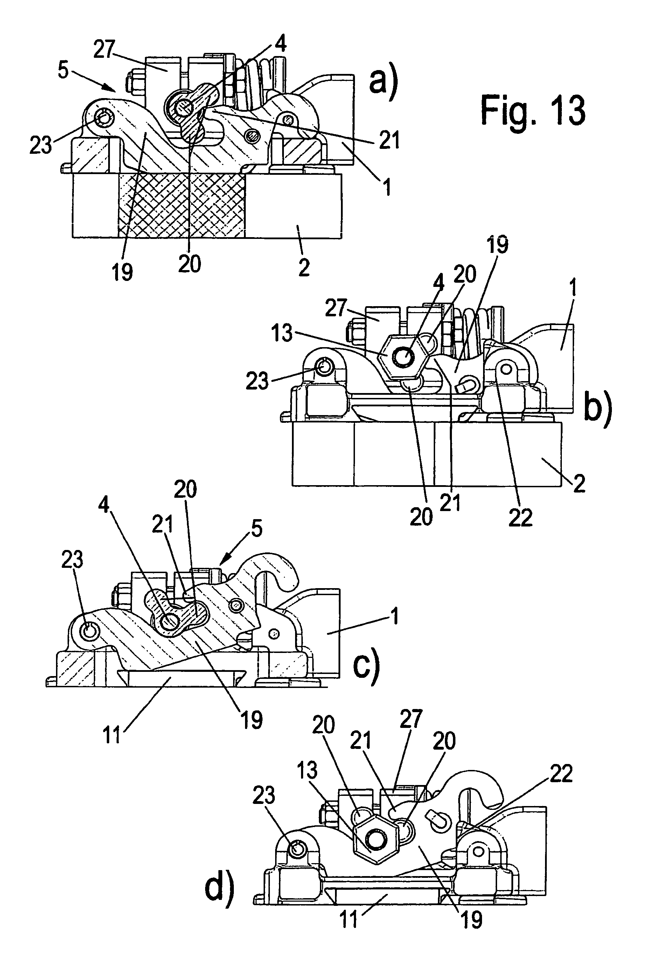

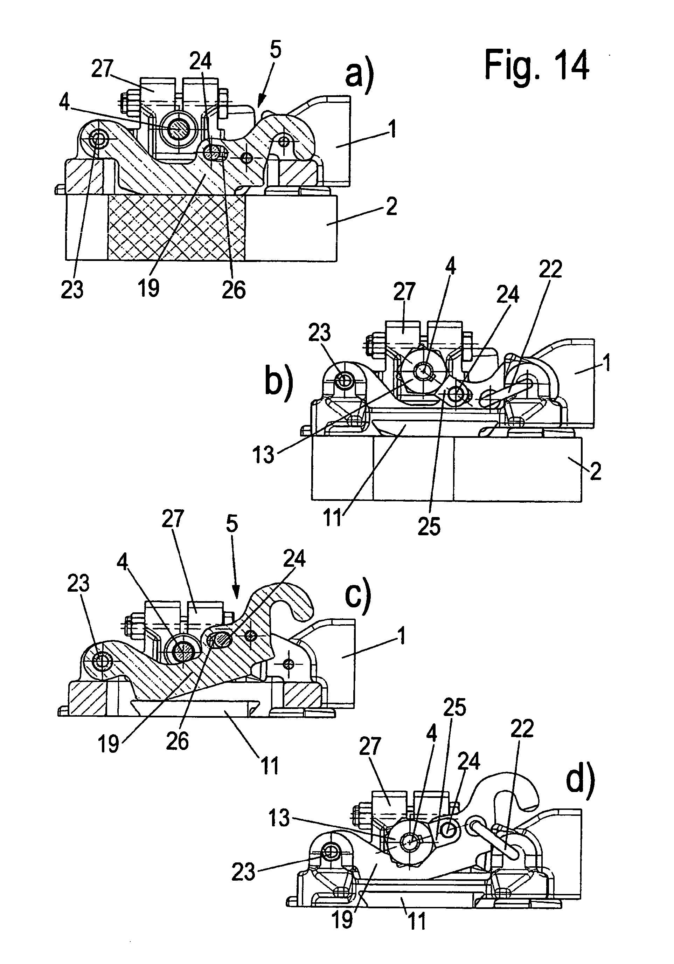

Zwei Ausführungsvarianten dieser Verriegelungsvorrichtung 5 sind in den Figuren 13 und 14 dargestellt. Dabei zeigen die jeweiligen Teilfiguren a) und b) den Belaghalter 1 mit angeschlossenem Bremsbelag 2, während die jeweiligen Teilfiguren c) und d) den Belaghalter 1 ohne angeklemmten Bremsbelag 2 wiedergeben.

Die in der Figur 13 erkennbare Verriegelungsvorrichtung 5, die in den Teilfiguren a) und c) als Schnittdarstellung zu erkennen ist, in den Teilfiguren b) und d) als Seitenansicht, besteht aus einem Schwenkriegel 19, der an einem Drehlager 23 des Belaghalters 1 schwenkbar gelagert ist und gegenüberliegend durch einen Bügel 22 am Belaghalter 1 gehalten ist. Dieser als U-förmiges Federelement ausgebildete Bügel 22 sichert den Schwenkriegel in Schließstellung, bei dessen Öffnen ein Totpunkt des Bügels 22 überwunden werden muss, der bei einem Verschließen einen Schnappeffekt bewirkt.

Zum Entriegeln wird die Nockenwelle 4 verdreht, wobei ein daran verdrehsicher gehaltener Exzenter 20 an eine angeformte Nase 21 des Schwenkriegels 19 angreift und diesen aus seiner Verriegelungsposition, wie sie in der Figur 13a) und b) dargestellt ist, in eine Offenstellung, entsprechend der Figur 13 c) und d) verschwenkt.

In der in der Figur 13 gezeigten Ausführungsvariante sind zwei winklig zueinander stehende Exzenter 20 vorgesehen, zwischen denen die Nase 21 positioniert ist. Dadurch ist sichergestellt, dass sich die Nockenwelle 4 in der richtigen Lage befindet. Weiterhin ist leicht zu erkennen, in welcher Richtung sich die Klemmung und Verriegelung lösen lässt.

In Verriegelungsstellung (Figuren 13 und 14, jeweils a) und b)) liegt der Schwenkriegel 19 vor der Einschuböffnung der Führungsbahn 11, so dass der einliegende Führungssteg 12 in Verschieberichtung, also in Längsachsrichtung gesichert einliegt.

Das in der Figur 14 gezeigte Beispiel sieht an der Nockenwelle 4 eine verdrehsicher angeordnete Lasche 25 vor, die einen Mitnehmerbolzen 24 trägt, der in ein Langloch 26 des Schwenkriegels 19 eingreift. Beim Verdrehen der Nockenwelle 4 drückt der Mitnehmerbolzen 24 den Schwenkriegel 19 aus seiner Verriegelungsposition, so dass die Einschuböffnung zur Führungsbahn 11 frei liegt, um beispielsweise den Bremsbelag 2 auszutauschen.

Anstelle der in der Figur 1 erkennbaren Anordnung des Bügels 22, dessen geschlossene Seite nach außen weist, kann eine in der Figur 9 gezeigte Anordnung gewählt werden, bei der die geschlossene Seite nach innen weist, so dass eine Betätigung des Schwenkriegels 19 ausschließlich über eine Verdrehung der Nockenwelle 4 möglich ist, während die Betätigung des Schwenkriegels 19 im Beispiel der Figur 1 durchaus auch über ein Kippen des Bügels 22 durch einen außenseitigen Angriff eines Werkzeuges möglich ist.

### Bezugszeichenliste

- 1: Belaghalter
- 2: Bremsbelag
- 3: Klemmeinrichtung
- 4: Nockenwelle
- 5: Verriegelungsvorrichtung
- 6: Klemmhebel
- 7: Druckfeder
- 8: Haube
- 9: Lagernase
- 10: Klaue
- 11: Führungsbahn
- 12: Führungssteg
- 13: Werkzeugaufnahme
- 14: Klemmhebel
- 15: Lagerbolzen
- 16: Klemmschieber
- 17: Zentrierdorn
- 18: Widerlagerschenkel
- 19: Schwenkriegel
- 20: Exzenter
- 21: Nase
- 22: Bügel
- 23: Drehlager
- 24: Mitnehmerbolzen
- 25: Lasche
- 26: Langloch
- 27: Lagerbock
- 28: Aufnahme
- 29: Gegenhalter

## Patentansprüche

1. Verbindung eines Bremsbelages (2), vorzugsweise einer Scheibenbremse eines Schienenfahrzeuges, mit einem Belaghalter (1), wobei der Bremsbelag (2) rückseitig einen Führungssteg (12) aufweist, der in einer Führungsbahn (11) des Belaghalters (1) einliegt und mittels eines den Führungssteg (12) längsseitig federbelastet hintergreifenden und gegen die Führungsbahn (11) pressenden Klemmelementes zumindest einer Klemmeinrichtung (3) am Belaghalter (1) gehalten ist, **dadurch gekennzeichnet, dass** das Klemmelement durch ein verdreh- oder verschiebbar am Belaghalter (1) befestigtes Betätigungsorgan außer Eingriff bringbar ist.

2. Verbindung nach Anspruch 1, **dadurch gekennzeichnet, dass** mit dem Klemmelement eine Druckfeder (7) in Eingriff steht, die sich andererseits am Belaghalter (1) abstützt.

3. Verbindung nach Anspruch 1 oder 2, **dadurch gekennzeichnet, dass** das Betätigungsorgan als eine sich in Längsachsrichtung der Führungsbahn (11) erstreckende Nockenwelle (4) ausgebildet ist.

4. Verbindung nach einem der vorhergehenden Ansprüche, **dadurch gekennzeichnet, dass** das Klemmelement als zweiarmiger Klemmhebel (6, 14) ausgebildet ist.

5. Verbindung nach Anspruch 4, **dadurch gekennzeichnet, dass** der Klemmhebel (6, 14) als Winkelhebel ausgebildet ist.

6. Verbindung nach Anspruch 4, **dadurch gekennzeichnet, dass** der Klemmhebel (6, 14) schwenkbar am Belaghalter (1) gelagert ist.

7. Verbindung nach Anspruch 4, **dadurch gekennzeichnet, dass** der Klemmhebel (6, 14) eine Haube (8) aufweist, in der die Druckfeder (7) gehalten ist.

8. Verbindung nach Anspruch 7, **dadurch gekennzeichnet, dass** der Klemmhebel (6, 14) auf seiner der Haube (8) gegenüberliegenden Seite als Klaue (10) ausgebildet ist, die am Führungssteg (12) anliegt.

9. Verbindung nach Anspruch 4, **dadurch gekennzeichnet, dass** der Klemmhebel (6) mit einer Lagernase (9) versehen ist, die in eine angepasste Ausnehmung des Belaghalters (1) einliegt.

10. Verbindung nach Anspruch 4, **dadurch gekennzeichnet, dass** der Klemmhebel (14) mittels Lagerbolzen (15) am Belaghalter (1) gelagert ist.

11. Verbindung nach einem der vorhergehenden Ansprüche, **dadurch gekennzeichnet, dass** das Klemmelement als Klemmschieber (16) ausgebildet ist, der parallel zur Grundfläche der Führungsbahn (11), quer zu deren Längserstreckung federbelastet verschiebbar ist.

12. Verbindung nach Anspruch 11, **dadurch gekennzeichnet, dass** die Druckfeder (7) bereichsweise auf einem Zentrierdorn (17) des Klemmschiebers (16) gerührt ist und sich andererseits am Belaghalter (1) abstützt.

13. Verbindung nach Anspruch 11, **dadurch gekennzeichnet, dass** der Klemmschieber (16) einen Widerlagerschenkel (18) aufweist, an dem die Nockenwelle (4) ebenso anliegt wie am Belaghalter (1).

14. Verbindung nach Anspruch 3, **dadurch gekennzeichnet, dass** zumindest eine Verriegelungsvorrichtung (5) vorgesehen ist, die in Verriegelungsstellung die Führungsbahn (11) im Bereich ihrer Einschuböffnung verschließt und die über die Nockenwelle (4) betätigbar ist.

15. Verbindung nach einem der vorhergehenden Ansprüche, **dadurch gekennzeichnet, dass** die Verriegelungsvorrichtung (5) einen am Belaghalter (1) schwenkbar gelagerten Schwenkriegel (19) aufweist.

16. Verbindung nach Anspruch 15, **dadurch gekennzeichnet, dass** die Nockenwelle (4) ein Entriegelungselement aufweist, das mit dem Schwenkriegel (19) korrespondiert.

17. Verbindung nach Anspruch 15, **dadurch gekennzeichnet, dass** das Entriegelungselement als Exzenter (20) ausgebildet ist, der zum Verschwenken des Schwenkriegels (19) an eine angeformte Nase (21) des Schwenkriegels (19) andrückbar ist.

18. Verbindung nach Anspruch 15, **dadurch gekennzeichnet, dass** an die Nockenwelle (4) ein Mitnehmerbolzen (24) angeschlossen ist, der in einem Langloch (26) des Schwenkriegels (19) geführt ist.

19. Verbindung nach Anspruch 18, **dadurch gekennzeichnet, dass** der Mitnehmerbolzen (24) in einer mit der Nockenwelle (4) verdrehsicher verbundenen Lasche (25) gehalten ist.

20. Verbindung nach Anspruch 15, **dadurch gekennzeichnet, dass** an den Schwenkriegel (19) an der der Anlenkung mit dem Belaghalter (1) gegenüberliegenden Seite ein Bügel (22) angeschlossen ist, der zur Schwenkwegbegrenzung im Belaghalter (1) gehalten ist.

21. Verbindung nach Anspruch 20, **dadurch gekennzeichnet, dass** der Bügel (22) als Federelement ausgebildet ist.

## Claims

1. Connection of a brake lining (2), preferably of a disc brake of a rail vehicle, comprising a lining mount (1), the brake lining (2) on the back comprising a guide bar (12), which is enclosed in a guide track (11) of the lining mount (1) and is held against the lining mount (1) by means of a spring-loaded clamping element of at least one clamping device (3) engaging the guide bar (12) from behind longitudinally and pushing against the guide track (11), **characterised in that** the clamping element can be brought out of engagement by an actuating member rotatably or displaceably attached to the lining mount (1).

2. Connection according to claim 1, **characterised in that** a compression spring (7), which on the other side is braced against the lining mount (1), engages the clamping element.

3. Connection according to claim 1 or 2, **characterised in that** the actuating member is embodied as a camshaft (4) extending in the direction of the longitudinal axis of the guide track (11).

4. Connection according to any of the preceding claims, **characterised in that** the clamping element is embodied as a two-armed clamping lever (6, 14).

5. Connection according to claim 4, **characterised in that** the clamping lever (6, 14) is embodied as a bell crank.

6. Connection according to claim 4, **characterised in that** the clamping lever (6, 14) is pivotally supported on the lining mount (1).

7. Connection according to claim 4, **characterised in that** the clamping lever (6, 14) comprises a cap (8), in which the compression spring (7) is held.

8. Connection according to claim 7, **characterised in that** on its side opposite the cap (8) the clamping lever (6, 14) is embodied as a claw (10), which bears on the guide bar (12).

9. Connection according to claim 4, **characterised in that** the clamping lever (6) is provided with a bearing lug (9), which is inserted into a matching recess of the lining mount (1).

10. Connection according to claim 4, **characterised in that** the clamping lever (14) is supported on the lining mount (1) by means of bearing bolts (15).

11. Connection according to any of the preceding claims, **characterised in that** the clamping element is embodied as a clamping slide (16), which is displaceable parallel to the base surface of the guide track (11) and spring-loaded transversely to the longitudinal dimension thereof.

12. Connection according to claim 11, **characterised in that** the compression spring (7) is guided in some areas on a centering stud (17) of the clamping slide (16) and on the other side is braced against the lining mount (1).

13. Connection according to claim 11, **characterised in that** the clamping slide (16) comprises an abutting leg (18), against which the camshaft (4) bears, just as it also bears against the lining mount (1).

14. Connection according to claim 3, **characterised in that** at least one locking device (5) is provided, which in the locking position closes the guide track (11) in the area of its insertion aperture and which can be actuated via the camshaft (4).

15. Connection according to any of the preceding claims, **characterised in that** the locking device (5) comprises a swiveling bolt (19) pivotally supported on the lining mount (1).

16. Connection according to claim 15, **characterised in that** the camshaft (4) comprises a release element, which corresponds to the swiveling bolt (19).

17. Connection according to claim 15, **characterised in that** the release element is embodied as an eccentric (20), which can be pressed against a formed-on lug (21) of the swiveling bolt (19) for swiveling of the swiveling bolt (19).

18. Connection according to claim 15, **characterised in that** a drive pin (24), which is guided in a slot (26) of the swiveling bolt (19), is connected to the camshaft (4).

19. Connection according to claim 18, **characterised in that** the drive pin (24) is held in a torsionally secured side bar (25) connected to the camshaft (4).

20. Connection according to claim 15, **characterised in that** a shackle (22), which is held in the lining mount (1) in order to limit the swiveling travel, is connected to the swiveling bolt (19) on the side opposite the articulated connection to the lining mount (1).

21. Connection according to claim 20, **characterised in that** the shackle (22) is embodied as a spring element.

## Revendications

1. Assemblage d'une garniture (2) de frein, de préférence d'un frein à disque d'un véhicule ferroviaire, à un porte-garniture (1), la garniture (2) de frein ayant du côté arrière une traverse (12) de guidage, qui vient dans une glissière (11) du porte-garniture (1) et qui est retenue sur le porte-garniture (1) au moyen d'un élément de serrage d'au moins un dispositif (3) de serrage, l'élément de serrage prenant par l'arrière en étant chargé par un ressort du côté longitudinal, la traverse (12) et la pressant sur la glissière (11), **caractérisé en ce que** l'élément de serrage peut être mis hors de prise par un organe d'actionnement fixé au porte-garniture (1) avec possibilité de tourner ou de coulisser.

2. Assemblage suivant la revendication 1, **caractérisé en ce que** un ressort (7) de compression, qui s'appuie d'autre part sur le porte-garniture, est en prise avec l'élément de serrage.

3. Assemblage suivant la revendication 1 ou 2, **caractérisé en ce que** l'organe d'actionnement est constitué sous la forme d'un arbre (4) à came s'étendant dans la direction de l'axe longitudinal de la glissière (11).

4. Assemblage suivant l'une des revendications précédentes, **caractérisé en ce que** l'élément de serrage est constitué sous la forme d'un levier (6, 14) de serrage à deux bras.

5. Assemblage suivant la revendication 4, **caractérisé en ce que** le levier (6, 14) de serrage est constitué sous la forme d'un levier coudé.

6. Assemblage suivant la revendication 4, **caractérisé en ce que** le levier (6, 14) de serrage est monté pivotant sur le porte-garniture (1).

7. Assemblage suivant la revendication 4, **caractérisé en ce que** le levier (6, 14) de serrage a un capot (8) dans lequel le ressort (7) de compression est retenu.

8. Assemblage suivant la revendication 7, **caractérisé en ce que** le levier (6, 14) de serrage est constitué, du côté opposé au capot (8), sous la forme d'une griffe (10) qui s'applique à la traverse (12) de guidage.

9. Assemblage suivant la revendication 4, **caractérisé en ce que** le levier (6) de serrage est pourvu d'un bec (9) d'appui, qui pénètre dans un évidement adapté du porte-garniture (1).

10. Assemblage suivant la revendication 4, **caractérisé en ce que** le levier (14) de serrage est monté sur le porte-garniture (1) au moyen d'axe (15) de palier.

11. Assemblage suivant l'une des revendications précédentes, **caractérisé en ce que** l'élément de serrage est constitué sous la forme d'un coulisseau (16) de serrage, qui peut coulisser, en étant soumis à l'action d'un ressort, transversalement à son étendue longitudinale parallèlement à la surface de base de la glissière (11).

12. Assemblage suivant la revendication 11, **caractérisé en ce que** le ressort (7) de compression est guidé par endroit sur un mandrin (17) de centrage du coulisseau (16) de serrage et s'appuie d'autre part sur le porte-garniture (1).

13. Assemblage suivant la revendication 11, **caractérisé en ce que** le coulisseau (16) de serrage a une branche (18) de butée, sur laquelle l'arbre (4) à came s'applique tout comme sur le porte-garniture (1).

14. Assemblage suivant la revendication 3, **caractérisé en ce qu'**il est prévu au moins un dispositif (5) de verrouillage, qui, dans la position de verrouillage, ferme la glissière (11) dans la zone de son ouverture d'entrée et qui peut être actionné par l'arbre (4) à came.

15. Assemblage suivant l'une des revendications précédentes, **caractérisé en ce que** le dispositif (5) de verrouillage a un pêne (19) pivotant monté pivotant sur le porte-garniture (1).

16. Assemblage suivant la revendication 15, **caractérisé en ce que** l'arbre (4) à came a un élément de déverrouillage, qui correspond au pêne (19) pivotant.

17. Assemblage suivant la revendication 15, **caractérisé en ce que** l'élément de déverrouillage est constitué sous la forme d'un excentrique (20) qui, pour le pivotement du pêne (19) pivotant, peut être poussé sur un bec (21) formé d'un seul tenant avec le pêne (19) pivotant.

18. Assemblage suivant la revendication 15, **caractérisé en ce que** l'arbre (4) à came est raccordé à un axe (24) d'entraîneur, qui est guidé dans une boutonnière (26) du pêne (19) pivotant.

19. Assemblage suivant la revendication 18, **caractérisé en ce que** l'axe (24) de l'entraîneur est retenu dans une éclisse (25) reliée sans possibilité de torsion à l'arbre (4) à came.

20. Assemblage suivant la revendication 15, **caractérisé en ce qu'**au pêne (19) pivotant, du côté opposé à l'articulation avec le porte-garniture (1), est raccordé un étrier (22) qui est retenu dans le porte-garniture (1) pour limiter la course de pivotement.

21. Assemblage suivant la revendication 20, **caractérisé en ce que** l'étrier (22) est constitué sous la forme d'un élément à ressort.
